# EUROPEAN PATENT APPLICATION

(11) **EP 4 099 535 A1**
(43) Date of publication of application: **07.12.2022**
(21) Application number: 21305762.3
(22) Date of filing: 04.06.2021
(51) Int. Cl.: H02J 7/00

(54) **ELECTRICAL COUPLING DATA EXCHANGE SYSTEM AND METHOD OF OPERATION**

(71) Applicant: Energysquare, 94160 Saint-Mandé (FR)
(72) Inventor: LOLLO, Daniel, 94160 SAINT MANDE (FR); VASQUEZ, Pablo, 94160 SAINT-MANDE (FR); POLTI, Alexis, 94160 SAINT MANDE (FR)
(74) Representative: Atout PI Laplace

(57) **Abstract**

A charging management system is provided based on communications between a charging device and a reporting device. The charging device may interface with the reporting device via a multi-contact surface, a conventional plug, or otherwise, the reporting device may typically comprise a portable, rechargeable device such as a smartphone, smart watch, camera, etc. Communications between the between the charging device and the reporting device take place via the same pair of power lines as are used for providing power from the charging device and the reporting device, by means of a non-volatile memory in the reporting device, which is accessed sequentially by one device or the other, and used to store information to be retrieved by the other to retrieve when activated. This exchange of information may implement a negotiation of a mutually acceptable power supply configuration, an authentication of a particular reporting device, etc.

## Description

### Field of the invention

The present invention relates generally to establishment of electrical connections for example in a context supporting arbitrary device dispositions, such as planar recharging surfaces with multiple contact zones.

### Background of the invention

Over recent years portable electronic devices have become increasingly ubiquitous-telephones, media players, tablet and laptop computers, loT (Internet of Things) devices or the like and portable loudspeaker units are now widespread. With a tendency towards miniaturisation on one hand, and the increasing size and brightness of displays and expectancy of wireless connectivity on the other, demands on the energy storage capacity of the batteries of these devices are more and more challenging. In view of these considerations, users are increasingly subject to "low battery anxiety", where the level of charge of their various devices, and the time until the next opportunity to recharge them, is a continuous source of concern. An attempt to address this problem using stand-alone general purpose rechargeable battery units adds to the list of devices to be recharged and carried. This issue is further complicated by the range of power connectors and varying voltage requirements of these devices, which can make it necessary for individuals to carry a range of chargers and cables with them, nullifying many of the advantages of the devices miniaturisation.

WO2017046458 presents a partial solution to this problem.

Figure 1 presents aspects of the prior art approach provided by WO2017046458.

As shown, a nomadic electronic device 120 is positioned to be recharged on a planar mating surface 110 provided with a plurality of contact zones 111, 112, 113, 114, by using an adapter 130.

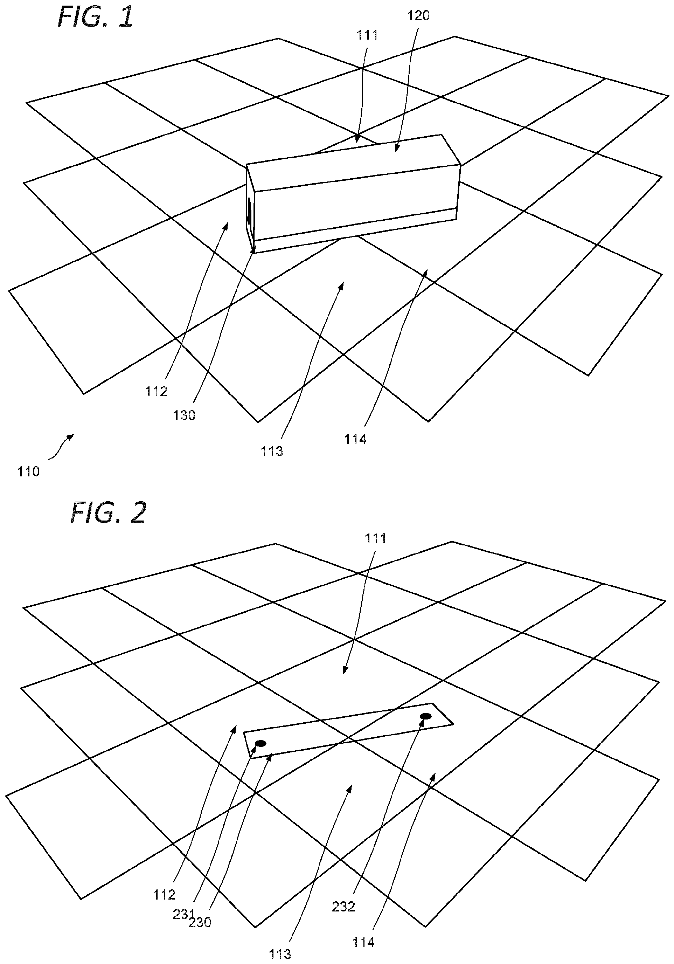

Figure 2 presents aspects of the prior art approach provided by WO2017046458 in further detail. As shown, the nomadic electronic device 120 is positioned to be recharged on a planar recharging surface 110 provided with a plurality of contact zones 111, 112, 113, 114, by using an adapter, which is represented in figure 2 as the footprint 230 of the adapter 130 on the surface 110. As shown in figure 2, the adapter 130 defines two electrically conducting terminals 231, 232 of small cross section in an external face of the adapter strip.

For each device to be energized, there is provision to abut an internal face of the strip against a face of the device and to engage a connector into the device on the side of a bent part of the strip to place the adapter between the device and the recharging surface so as to allow conduction from two of the contact zones, the terminals 231, 232 being spaced a predetermined distance apart which is much greater than their cross-sectional size. As described in WO2017046458, contact zones are selectively energized with current, so that the zones 112, 114 on which the two terminals 231, 232 are positioned respectively come into a functional state and allow recharging of the device 120 via the adapter 230.

As described in WO2017046458, in order to determine the status of each contact zone with a view to determining the presence of a device to be charged, there is provided a processing unit which is able to briefly drive independently each of the conductive zones from a low potential (e.g. 0V) to a high potential (e.g. 5V). The processing unit also manages a data link to drive ADCs for measuring the current drawn by each conductive zone. If the current drawn corresponds to an expected current value for a chargeable device, the high voltage is maintained on the corresponding conductive zone. Otherwise, it is returned to the low voltage.

Accordingly, nomadic devices equipped with the proposed adapter can be placed freely on such a planar surface equipped with the described system, and hopefully be detected and provided with a power supply voltage accordingly.

A drawback of this approach lies in the fact that in a case where an electrical connection exists between any two conductive regions for some reason besides the presence of a chargeable device, for example due to a conductive article such as a metal tool or ornament being placed on the surface, the testing process will create a short circuit to ground through this connection, leading to a flow of current. Depending on the conductive properties of the article, this may appear to the controller as characteristic of a chargeable device, which may lead to an attempt to supply power to the article, leading to a waste of energy and possible damage to the article, the conductive zones or the controller.

US2010/022285 presents a related solution for retrofitting a mobile electronic device, which has an input power receptacle located on its side, to receive power from a power delivery pad that has a flat power delivery surface. A connector assembly is connectable to the mobile electronic device by plugging a connector into the input power receptacle of the device. A power receiver assembly connects pivotally and electrically to the connector assembly by magnetism. The power receiver assembly is pivotal to position a power receiver hub, which is at a fixed distance from the connector assembly, over an axis of the mobile device, where an anchor comprising magnetic material or a mechanical attachment apparatus is adhered to the surface of the mobile device, and the hub is attached to the anchor by magnetism also, so that it is simply and easily detachable and re-attachable. The connector is adjustable in the connector assembly to position the power receiver assembly flush with the surface of the mobile device. Alternate connector assemblies with differently configured connectors are attachable magnetically or mechanically to the power receiver assembly.

WO2005/060401 meanwhile describes a power transfer pad, having a non-conductive board having a top and a bottom plurality conductive substrates sections disposed across the top of the non-conductive board; at least one conducting element disposed on each of the conductive substrate sections; a plurality of electrical contacts on the bottom the non-conductive board, wherein each of the electrical contacts on the bottom of the non-conductive board are in electrical communication with one of the conductive substrate sections on the top of non-conductive board.

A general problem arising with these various technologies relates to the difficulties of channelling voltage at the proper level to the negative or ground and positive terminals of any device to be supplied, whilst avoiding short circuits or leakage currents through conductive articles or substances that may come into contact with the charging surface. Generally, the preceding prior art methods rely to some extent on the dimensions and/or physical disposition of the charging regions of the surface, and of dielectric regions between them on one hand, and the physical disposition of charging terminals on the device to be charged on the other hand.

These approaches are not entirely satisfactory since they tend to treat all and any connected devices as equal and interchangeable, with respect to their coupling characteristics and entitlement to connect, which may lead to difficulties in terms of over-voltage supply, over current supply, overheating and the like. It is thus as a consequence desirable to provide an arrangement offering improvements in these considerations. Partial solutions to these problems are provided in patent applications EP3425763, EP3425764, FR3041170, EP3681990 and EP3681005. It is desirable with regard to these applications to provide a flexible communication mechanism which achieves these objectives without interfering with the timely provision of power, yet not requiring additional communication channels.

### Summary of the invention

In accordance with the present invention in a first aspect there is provided a reporting device comprising a first supply line and a second supply line and an operational unit coupled across said first supply line and said second supply line. The reporting device further comprises a non-volatile memory addressable via the first supply line and said second supply line, and a reporting processor in communication with the non-volatile memory and having power supply connections coupled to the first supply line and the second supply line, wherein the non-volatile memory comprises first data reflecting one or more characteristics of said reporting device including at least a default power supply requirement of said reporting device, and wherein the reporting processor is configured, on receiving power via said first supply line and the second supply line, to interrogate the non-volatile memory to read second data , to process said second data and to write third data as a result of said processing to said memory constituting a substantiated power supply request.

In accordance with a development of the first aspect, the reporting processor is configured to interpret the second data as comprising an indication of an available power supply configuration for the first supply line and the second supply line, wherein the reporting processor is further configured to process the indication of an available power supply configuration to determine whether the available power supply configuration is compatible with the requirements of the reporting device, and where the third data comprises an indication that the available power supply configuration is compatible with the requirements of said reporting device.

In accordance with a development of the first aspect, the reporting processor is configured to interpret the second data as comprising an indication of an available power supply configuration for the first supply line and the second supply line, wherein the reporting processor is further configured process the indication of an available power supply configuration to determine whether said available power supply configuration is compatible with the requirements of said reporting device, and where the third data comprises an indication of an alternative power supply configuration compatible with the requirements of the reporting device, the alternative power supply configuration being different from the available power supply configuration and said default power supply requirement.

In accordance with a development of the first aspect, the reporting processor is configured to interpret said second data as comprising an encrypted challenge value, wherein the processor is further configured to process the encrypted challenge value using an encryption key encoded in the reporting processor to obtain a decrypted challenge value, where the third data comprises the decrypted challenge value.

In accordance with the present invention in a second aspect there is provided a charging device comprising a first supply line and a second supply line and a charging processor coupled to communicate across the first supply line and the second supply line, and to switchably connect power across the first supply line and the second supply line at a level determined by the charging processor for supply to a reporting device connected thereto in accordance with a specified power budget. In accordance with this aspect the charging processor is configured to read first data reflecting one or more characteristics of the reporting device including at least a default power supply requirement of the reporting device from a non-volatile memory of the reporting device via the first supply line and the second supply line, and wherein the charging processor is configured to process said first data, and to write second data to said non-volatile memory of said reporting device via the first supply line and the second supply line as a result of the processing to said memory constituting a substantiated power supply response, and to read third data from the non-volatile memory, and determine whether the third data constitutes a substantiated data request, and in a case where said third data constitutes a substantiated data request, to switch power across the first supply line and the second supply line.

In accordance with a development of the second aspect the charging device is further adapted, in a case where the third data does not constitutes a substantiated power request, to switch power across the first supply line and the second supply line for a predetermined period, and after expiry of the predetermined period, to read further third data from the non-volatile memory of the reporting device via the first supply line and the second supply line, and to determine whether the third data constitutes a substantiated power supply request, and in a case where the third data constitutes a substantiated power supply request, switching power across the first supply line and the second supply line.

In accordance with a development of the second aspect the charging processor is configured to determine whether the default power supply requirement is compatible with the specified power budget (in "first data" AKA "A"), and in a case where the default power supply requirement is not compatible with the specified power budget, to incorporate an indication of an available power supply configuration in the second data, and where the third data comprises an indication that the available power supply configuration is compatible with the requirements of the reporting device and thereby constitutes a substantiated power supply request, and where the operation of switching power across the first supply line and the second supply line comprises switching power across the first supply line and the second supply line in accordance with the available power supply configuration .

In accordance with a further development of the second aspect the charging processor is configured to determine whether the default power supply requirement is compatible with the specified power budget, and in a case where the default power supply requirement is not compatible with the specified power budget, to incorporate an indication of an available power supply configuration in the second data, and where the third data comprises an indication of an alternative power supply configuration being different from the available power supply configuration and the default power supply requirement.

In accordance with a further development of the second aspect the charging processor is configured to determine whether the alternative power supply configuration is compatible with the specified power budget, and in a case where the alternative power supply configuration is not compatible with the specified power budget, considering the third data not to constitute a substantiated power supply request.

In accordance with a further development of the second aspect the charging processor is configured to determine whether the alternative power supply configuration is compatible with the specified power budget, and in a case where the alternative power supply configuration is compatible with the specified power budget, considering the third data to constitute a substantiated power supply request and where the operation of switching power across the first supply line and the second supply line comprises switching power across the first supply line and the second supply line in accordance with the alternative power supply configuration.

In accordance with a further development of the second aspect the charging processor is configured to encrypt an initial challenge value using an encryption key encoded in the charging processor to obtain an encrypted challenge value, and to incorporate the encrypted challenge value in the second data, and wherein the charging processor is further configured to read a decrypted challenge value from the third data, and to compare the encrypted challenge value with the decrypted challenge value, and in a case where the encrypted challenge value and the decrypted challenge value do not match, considering the third data not to constitute a substantiated power supply request.

In accordance with a further development of the second aspect the charging processor is further configured to read the second data to extract the encrypted challenge value, wherein the step operation of comparing the encrypted challenge value with the decrypted challenge value is performed with respect to the encrypted challenge value read from the second data.

In accordance with a further development of the second aspect the charging processor is further configured to read the non-volatile memory of the reporting device via the first supply line and the second supply line to determine whether an identifier of the charging device is stored therein.

In accordance with a further development of the second aspect the charging device is configured prior to determining whether the third data constitutes a substantiated power supply request, to read the second data in the non-volatile memory of the reporting device via the first supply line and the second supply line, and determine whether the second data comprises an identifier of the charging device, and in a case where the second data does not comprise an identifier of the charging device, determining the third data not to constitute a substantiated data request, and
wherein the substantiated power supply response further comprises an identifier of the charging device.

In accordance with the present invention in a third aspect there is provided method of operating a reporting device comprising a first supply line and a second supply line and an operational unit coupled across the first supply line and the second supply line, the reporting device further comprising a non-volatile memory addressable via the first supply line and the second supply line, and a reporting processor in communication with the non-volatile memory and having power supply connections coupled to the first supply line and the second supply line, wherein the non-volatile memory comprises first data reflecting one or more characteristics of the reporting device including at least a default power supply requirement of the reporting device, the method comprising the steps of, on receiving power via the first supply line and the second supply line interrogating the non-volatile memory to read second data;
processing the second data; and writing third data as a result of the processing to the memory constituting a substantiated power supply request.

In accordance with the present invention in a fourth aspect there is provided method of operating a charging device comprising a first supply line and a second supply line and a charging processor coupled to communicate across the first supply line and the second supply line, and to switchably connect power across the first supply line and the second supply line at a level determined by the charging processor for supply to a reporting device connected thereto in accordance with a specified power budget, the method comprising the steps of the charging processor reading first data reflecting one or more characteristics of the reporting device including at least a default power supply requirement of the reporting device from a non-volatile memory of the reporting device via the first supply line and the second supply line; processing the first data, and writing second data to the non-volatile memory of the reporting device via the first supply line and the second supply line as a result of the processing to the memory constituting a substantiated power supply response, and reading third data from the non-volatile memory, and the charging processor determining whether the third data constitutes a substantiated data request, and in a case where the third data constitutes a substantiated data request, switching power across the first supply line and the second supply line.

In accordance with a development of the fourth aspect there is provided the further step, in a case where the third data does not constitutes a substantiated data request, of switching power across the first supply line and the second supply line for a predetermined period, and after expiry of the predetermined period, reading further third data from the non-volatile memory of the reporting device via the first supply line and the second supply line, and determining whether the third data constitutes a substantiated power supply request, and
in a case where the third data constitutes a substantiated power supply request, switching power across the first supply line and the second supply line.

In accordance with the present invention in a fifth aspect there is provided computer program comprising instructions which, when the program is executed by a computer, cause the computer to carry out the method of the third or fourth aspects.

### Brief Description of the Drawings

The above and other advantages of the present invention will now be described with reference to the accompanying drawings, for illustration purposes only, in which:
Figure 1 presents aspects of the prior art approach provided by WO2017046458,
Figure 2 presents aspects of the prior art approach provided by WO2017046458 in further detail,
Figure 3 shows a system comprising a reporting device in accordance with certain embodiments,
Figure 4 shows a system comprising a charging device in accordance with certain embodiments,
Figure 5 shows operations of a power level negotiation between a reporting device and a charging device according to respective embodiments,
Figure 6 represents a chronologically offset implementation of the trust bootstrapping mechanism,
Figure 7 shows a system comprising a charging device and a reporting device as described with respect to figures 3 and 4 respectively.

### Detailed description

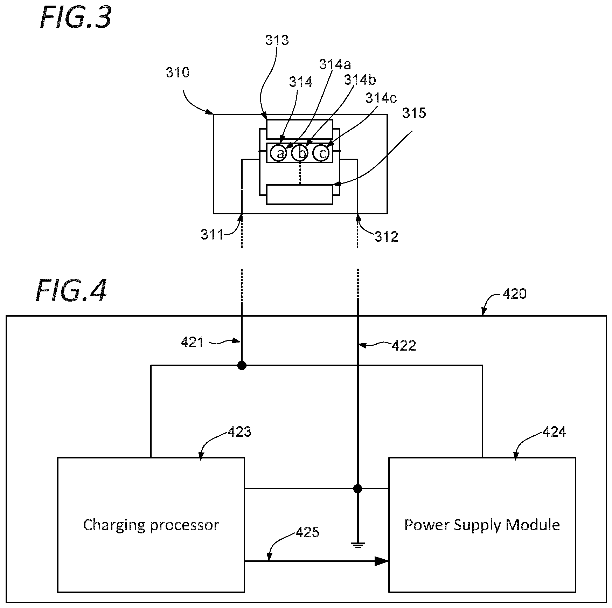

Figure 3 shows a system comprising a reporting device in accordance with certain embodiments.

As shown, a reporting device 310 comprises a first supply line 311 and a second supply line 312 and an operational unit 313 coupled across said first supply line and said second supply line, said reporting device further comprising a non-volatile memory 314 addressable via said first supply line and said second supply line, and a reporting processor 315 in communication with the non-volatile memory 314 and having power supply connections coupled to said first supply line and said second supply line.

Communications between the non-volatile memory 314 and the Reporting Processor 315 may take place via the first supply line 311 and a second supply line 312, or via additional communication channels as represented schematically in figure 3 by a dotted line between non-volatile memory 314 and the Reporting Processor 315. In particular, a third line directly connected to a data pin of the non-volatile memory may be used together with the first supply line 311 or second supply line 312 providing a reference voltage, e.g. a ground value.

When providing power, a potential difference will exist between the first supply line and second supply line. One of the first supply line and second supply line may then be seen as representing a zero, reference or ground voltage, with respect to which the potential difference is defined on the other said supply line. Either or both supply lines may comprise conductive device casing elements, conductive connector housing elements or the like.

The operational unit 313 may comprise any electronic system, or group of systems, operable at a particular supply voltage, or range of supply voltages. For example, the operation unit may comprise a power cell or battery, possibly with associated charge control circuitry. The operational unit may comprise a motor, possibly with associated control circuitry. The operational unit may comprise a computing device, comprising for example one or more processors, one or more memory devices, one or more interface devices, and so on, as known to the skilled person. The operational unit may comprise any or all of these examples, and/or any of the multitude of electrical devices that will readily occur to the skilled person. It will be appreciated that some or all of these devices may require additional operating voltages besides the first potential difference, which additional operating voltages may be provided by independent conventional supply means, additional parallel circuits in accordance with the present invention, or by modification of the first potential difference as required. A general purpose of embodiments described herein is to ensure that the operational unit is effectively provided with power meeting its operational requirements, as defined for example in terms of a voltage range and a current range.

The non-volatile memory may comprise any non-volatile memory technology as will readily occur to the skilled person, including flash memory storage such as NAND flash, solid-state drives (SSD), ROM chips such as EPROM (erasable programmable ROM) and EEPROM (electrically erasable programmable ROM) and the like.

The non-volatile memory 314 comprises first data 314a reflecting one or more characteristics of the reporting device including at least a default power supply requirement of said reporting device.

The reporting processor may comprise any computing device capable of implementing the operations described below, including any general purpose programmable device such as a computer, embedded device, microprocessor, etc, field-programmable gate array (FPGA), program- and application-specific integrated circuits (PASIC/ASICs), program- and application-specific standard products (PSSP/ASSPs), system-on-a-chip (SOC), and complex programmable logic devices (CPLDs), for example, or any combination of these and other components, or otherwise as will readily occur to the skilled person.

The reporting processor is configured, on receiving power via the first supply line and said second supply line, to interrogate the non-volatile memory to read second data 314b, to process said second data and to write third data 314c as a result of said processing to said memory constituting a substantiated power supply request.

As is explained in further detail below, the second data 314b is written to the non-volatile memory by a charging device in accordance with aspects of the invention, so that the processing of the second data and writing third data 314c as a result of this processing may constitute a confirmation that power supply may proceed, that is to say, a substantiated power supply request.

Accordingly, there is provided a method of operating a reporting device comprising a first supply line and a second supply line and an operational unit coupled across said first supply line and said second supply line, said reporting device further comprising a non-volatile memory addressable via said first supply line and said second supply line, and a reporting processor in communication with said non-volatile memory and having power supply connections coupled to said first supply line and said second supply line, where the non-volatile memory comprises first data reflecting one or more characteristics of said reporting device including at least a default power supply requirement of said reporting device. Said method comprises the steps of, on receiving power via said first supply line and said second supply line interrogating said non-volatile memory to read second data; processing the second data; and writing third data as a result of said processing to said memory constituting a substantiated power supply request.

The specific content of the second data, and the basis on which it is determined by the reporting device to constitute a substantiated power supply request, or not, may take various forms, in accordance with a number of variants.

In one variant, the reporting processor may be configured to interpret the second data as comprising an indication of an available power supply configuration for said first supply line and said second supply line, wherein the reporting processor is further configured to process this indication of an available power supply configuration to determine whether it is compatible with the requirements of the reporting device, and where the third data comprises an indication that said available power supply configuration is compatible with the requirements of said reporting device.

On this basis, as described in further detail below, the second data may be understood to comprise a proposed power supply level, as offered by a charging device, which may be different to a default power supply level which may be defined in the first data 314a. In other words, the reporting device may make an initial request in the form of a default power supply requirement as expressing in the first data 314a, receive a counter proposal via the second data 314b, and then write third data 314c whose content may be understood as an acceptance of the counter proposal. The firm of this acceptance may be defined as may be conveniently interpreted by the charging device as discussed below.

In a case where the reporting processor determine the available power supply configuration not to be compatible with the requirements of the reporting device, the third data may comprise an indication of an alternative power supply configuration compatible with the requirements of said reporting device, said alternative power supply configuration being different from said available power supply configuration and said default power supply requirement. In other words, the reporting device may make an initial request in the form of a default power supply requirement as expressing in the first data 314a, receive a counter proposal via the second data 314b, and then emit a new, revised request in the form of the alternative power supply configuration written as the third data 314c.

In accordance with a further variant, the reporting processor may be configured to interpret the second data 314b as comprising an encrypted challenge value, wherein the processor is configured to process the encrypted challenge value using an encryption key encoded in said reporting processor to obtain a decrypted challenge value, where said third data comprises said decrypted challenge value.

In accordance with this variant, the reporting device may demonstrate its trusted status with respect to a particular charging device, or group of charging devices, or otherwise, by providing the expected response to the encrypted challenge.

Figure 4 shows a system comprising a charging device in accordance with certain embodiments.

As shown, there is provided a charging device 420 comprising a first supply line 421 and a second supply line 422 and a charging processor 423 coupled to communicate across said first supply line 420 and said second supply line 421, and to switchably connect power across said first supply line and said second supply line at a level determined by said charging processor for supply to a reporting device connected thereto in accordance with a specified power budget. As shown in figure 4, this is represented schematically by a power supply module 424, receiving a control signal 425 from the charging processor 423, the outputs of the power supply module 424 being connected to the first supply line 421 and a second supply line 422.

Such communication may conveniently be performed via a 1-wire bus or similar.

In accordance with this embodiment, the charging processor 423 is configured to read first data "a" reflecting one or more characteristics of a reporting device, when connected thereto from a non-volatile memory of the reporting device via the first supply line and said second supply line.

This first data "a" includes at least a default power supply requirement of the reporting device.

The charging processor is further configured to process the first data, and to write second data "b" to the non-volatile memory of said reporting device via said first supply line and said second supply line to the non-volatile memory. This second data "b" is obtained as a result of the processing of the first data, and constitutes a substantiated power supply response. The specific content of the second data, and the basis on which it is determined by the reporting device to constitute a substantiated power supply request, or not, may take various forms, in accordance with a number of variants as discussed further below.

In accordance with this embodiment, the charging processor 423 is finally configured to read third data from said non-volatile memory, and determine whether said third data constitutes a substantiated data request.

Accordingly, there is correspondingly provided a method of operating a charging device comprising a first supply line and a second supply line and a charging processor coupled to communicate across said first supply line and said second supply line, and to switchably connect power across said first supply line and said second supply line at a level determined by said charging processor for supply to a reporting device connected thereto in accordance with a specified power budget. The method comprises the steps of the charging processor reading first data reflecting one or more characteristics of said reporting device including at least a default power supply requirement of said reporting device from a non-volatile memory of said reporting device via said first supply line and said second supply line; processing said first data, and writing second data to said non-volatile memory of said reporting device via said first supply line and said second supply line as a result of said processing to said memory constituting a substantiated power supply response, and reading third data from said non-volatile memory, and said charging processor determining whether said third data constitutes a substantiated data request, and in a case where said third data constitutes a substantiated data request, and switching power across said first supply line and said second supply line.

The specific content of the third data, and the basis on which it is determined to constitute a substantiated power supply request, or not, may take various forms, in accordance with a number of variants as discussed further below.

On determining the third data to constitute a substantiated power supply request, the charging processor may switchably connect power across said first supply line and said second supply line. The power level may correspond to the default power level as specified in the first data "a", or otherwise as developed further below.

While as set out above the first data reflects one or more characteristics of said reporting device including at least a default power supply requirement of said reporting device. Other data that may also be present, and which may be incorporated in the processing to determine the second data to be written, may comprise some or all of the following values:
Protocol: determine the communication protocol version. In embodiments where this information is included in the first data, all remaining operations may be performed in accordance with the details of the specified protocol. This approach provides the possibility of the details of the process evolving over time, whilst ensuring backwards compatibility between older devices.
Hardware: determine the Reporting device hardware version. The availability of this data makes it possible to implement a communications protocol and supported operations specific to the Hardware version/generation of the Reporting Device.
Manufacturer: determine the Reporting device manufacturer ID. The availability of this data makes it possible to perform authorisations, manage access permissions and the like, in a manner adapted to the implementation preferences of individual manufacturers.
Unique ID of the Reporting device: The information may be recorded and reported as necessary, with a view to compiling a usage statistics, which may in turn be used as the basis of high level power budgeting, resource allocation and the like.
Signature: signature data that authenticates section A using a private key shared between Receiving device and Charging device. This measure can provide a degree of safety by ensuring, for example, that the section a data is not corrupt or otherwise compromised, which might otherwise lead to incompatible power levels being provided by the charging device.

In certain embodiments, any or all of these data, where available, may be taken into account in determining whether a substantiated power request is present.

In particular, the charging device may identify the reporting device UID and/or the equivalent on the reporting device side. As such, the charging processor may be further configured to read said non-volatile memory of said reporting device via said first supply line and said second supply line to determine whether an identifier of said charging device is stored therein.

On this basis the charging device may be configured prior to determining whether said third data constitutes a substantiated power supply request, to read said second data in said non-volatile memory of said reporting device via said first supply line and said second supply line, and determine whether said second data comprises an identifier of said charging device, and in a case where said second data does not comprise an identifier of said charging device, determining said third data not to constitute a substantiated data request, and
wherein said substantiated power supply response further comprises an identifier of said charging device.

Accordingly a double verification may be performed where the presence of the ID of the charging device in the second data (b). Since the ID may be written in the "substantiated power supply response" in any case, this may only occur once.

It may be anticipated that in some cases a substantiated power request is not present, for example due to unacceptable values in the first or third data. This may be due to corrupt data, processing errors, or merely part of a power negotiation process as described below. Since the reporting device is presumed to be in need of power, so that is may not be capable of performing further operations independently, yet the absence of a substantiated power request would ordinarily preclude to provision of power, in this situation the only way forward may be for the charging device to provide some power in a circumscribed manner, so as to give the receiving device an additional chance to process the new second data and complete the third data appropriately.

Accordingly, in one variant, in a case where the third data does not constitutes a substantiated power request, the charging device may be adapted to switch power across the first supply line and said second supply line for a predetermined period.

This period may be determined as sufficient to allow the reporting processor to read new second data, perform processing of the second data to determine new third data, and to write the new third data to the non-volatile memory as described above, but not to provide substantial power for the use of the operational unit, e.g. for the substantial charging of a battery of the reporting device, etc. This may comprise briefly charging a battery of the reporting device to a minimal extent necessary to support the operation of the reporting processor to perform processing of the second data to determine new third data, and to write the new third data to the non-volatile memory as described above.

The charging device may be adapted accordingly after expiry of the predetermined period to read further third data from said non-volatile memory of said reporting device via said first supply line and said second supply line, and to determine whether said third data constitutes a substantiated power supply request, and in a case where said third data constitutes a substantiated power supply request, switching power across said first supply line and said second supply line.

Corresponding, the method of operating the charging device may comprise the further step, in a case where said third data does not constitutes a substantiated data request, of switching power across said first supply line and said second supply line for a predetermined period, and after expiry of said predetermined period, reading further third data from said non-volatile memory of said reporting device via said first supply line and said second supply line, and determining whether said third data constitutes a substantiated power supply request, and in a case where said third data constitutes a substantiated power supply request, switching power across said first supply line and said second supply line.

These operations may be repeated cyclically, until a valid substantiated power request is provided, and durable power supply may begin, or until the reporting device is removed, and the non-volatile memory is no longer readable by the charging device. Alternatively, a certain number of attempts may be allowed, after which no further attempts are permitted. In a case where a particular device repeatedly fails to provide a substantiated power request, details of the device, e.g. as obtained from the first data, may be reported.

It will be appreciated that the charging device of figure 4 and the reporting device of figure 3 are so linked as to form a single general inventive concept, with the two devices operating in a complementary manner. By the same token, the variants discussed above with respect to the reporting device may be similarly reflected in the charging device.

In certain embodiments, the exchange of data via the first, second and third data stored in the non-volatile memory of the reporting device may be used to implement a power level negotiation, matching the requirements of the reporting device with the limitations of the charging device.

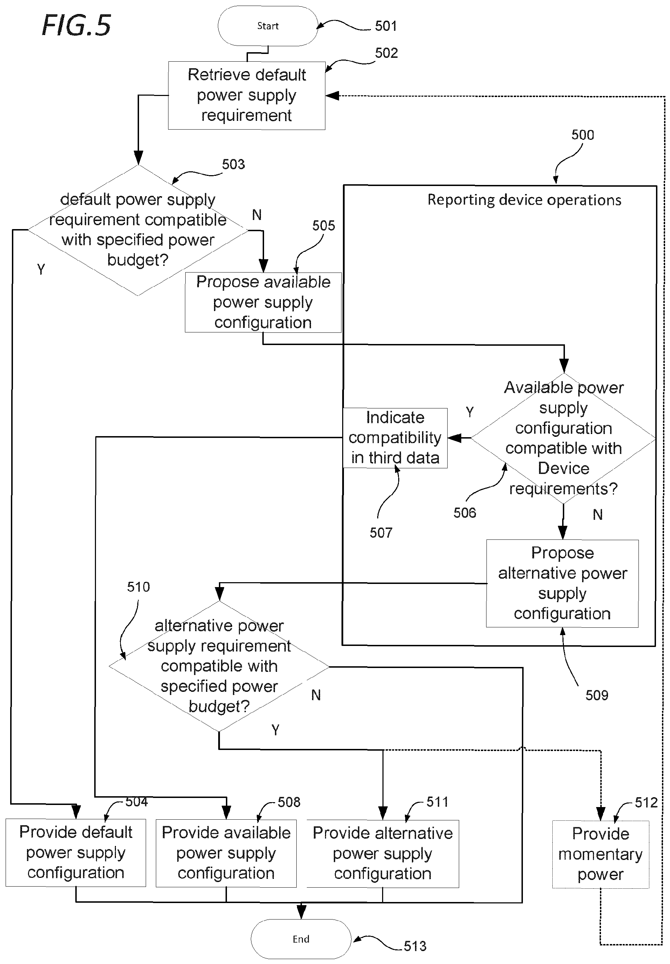

Figure 5 shows operations of a power level negotiation between a reporting device and a charging device according to respective embodiments.

It will be appreciated that for improved clarity figure 5 combines aspects of the reporting device (gathered in box 500) and aspects of the charging device, and furthermore with a view to presenting an approach covering multiple scenarios, combines operations which need not necessarily be present in all embodiments.

As shown, the negotiation starts at step 501 before proceeding to step 502 at which a default power supply requirement is retrieved, i.e. from the first data as discussed above.

The negotiation then proceeds to step 503 at which the charging device determines whether the default power supply requirement is compatible with the specified power budget as read from the first data (a).

In a case where the default power supply requirement is compatible with the specified power budget of the charging processor, subject to receiving a satisfactory response in the third data as discussed above, the charging device may proceed to provide power in accordance with the default power supply configuration at step 504, and terminate at step 513.

In a case where the default power supply requirement is not compatible with the specified power budget the charging processor may be configured to incorporate an indication of an available power supply configuration in the second data so as to propose an available power supply configuration at step 505.

As discussed above, the Reporting device may assess whether the available power supply configuration is compatible with device requirements at step 506, and in a case where the available power supply requirement is compatible with the device requirements the reporting processor may indicate this in the third data at step 507, as discussed above, which the charging device may interpret as a substantiated power supply request and proceed to provide power in accordance with the default power supply configuration at step 508, and terminate at step 513. On this basis, in view of the intervening operation of the reporting device as discussed above, the third data may comprises an indication that the available power supply configuration is compatible with the requirements of the reporting device and thereby constitutes a substantiated power supply request, and on this basis the operation of switching power across said first supply line and said second supply line may comprises switching power across the first supply line and the second supply line in accordance with the available power supply configuration.

This indication that the available power supply configuration is compatible with the requirements of said reporting device may take any convenient form- it may comprise a binary value, it may comprise an repetition or confirmation of the available power supply value, or it may constitute a tacit indication, for example through the absence of a counter-offer or the like as discussed below.

In a case where the available power supply requirement is not compatible with the requirements of the device, the reporting processor may be configured to incorporate an indication of an alternative power supply configuration in the third data as discussed above so as to propose an alternative power supply configuration at step 509.

In some embodiments, the Reporting device may communicate with the operational unit to determine whether the available power supply configuration is acceptable, so as to take into account the current work load of the device, its charge level, or other variable factors which may mean that a particular available power supply configuration which may have been sufficient for the same device at some point in the past, is no longer, or vice versa.

As discussed above, the Charging device may assess whether the alternative power supply configuration is compatible with the available power budget at step 510, and in a case where the alternative power supply requirement is compatible with the specified power budget the charging processor may interpret the response as a substantiated power supply request and proceed to provide power in accordance with the alternative power supply configuration at step 511, and terminate at step 513. Accordingly, the charging processor may be configured to determine whether the alternative power supply configuration is compatible with the specified power budget, and in a case where the alternative power supply configuration is compatible with the specified power budget, considering the third data to constitute a substantiated power supply request and where said operation of switching power across said first supply line and said second supply line comprises switching power across said first supply line and said second supply line in accordance with the alternative power supply configuration.

In a case where the alternative power supply requirement is not compatible with the available power budget, the charging processor may be configured to simply terminate at step 513 without providing any power, or in accordance with certain variants presented above, may provide power for a predetermined period at step 512, making it possible to revert begin a new cycle. Accordingly the charging processor may be configured to determine whether the alternative power supply configuration is compatible with the specified power budget, and in a case where said alternative power supply configuration is not compatible with the specified power budget, considering said third data not to constitute a substantiated power supply request.

The results of previous cycles being stored by the charging device, so that where one cycle fails to converge on an acceptable power supply solution, the available power supply configuration proposed at step 505 may evolve from one cycle to the next, until a mutually acceptable solution is reached.

Since in accordance with certain variants as presented above the identity of the reporting device and other characterising information may be read in the first data, it is possible that the final acceptable solution from an earlier negotiation with the same device may be stored, and reused for example in fixing the available power supply configuration at step 505 in future attempts to connect the same device, other devices of the same type, and so on.

In certain embodiments, the exchange of data via the first, second and third data stored in the non-volatile memory of the reporting device may be used to implement a trust bootstrapping mechanism.

In particular, the charging processor may be configured to encrypt an initial challenge value using an encryption key encoded in the charging processor to obtain an encrypted challenge value, and to incorporate the encrypted challenge value in the second data, wherein the charging processor is further configured to read a decrypted challenge value from the third data, and to compare the encrypted challenge value with said decrypted challenge value, and in a case where said encrypted challenge value and said decrypted challenge value do not match, considering said third data not to constitute a substantiated power supply request.

As discussed above, insofar as the reporting device is able to decrypt the challenge value, in view of the encryption key encoded in the reporting processor, if the encryption keys of the reporting device and the charging device match, the decrypted challenge value should be identical to the original challenge value. Accordingly, the charging processor may be further configured to read the second data to extract the encrypted challenge value, wherein said step operation of comparing said encrypted challenge value with said decrypted challenge value is performed with respect to said encrypted challenge value read from said second data.

Optionally, this process may be offset chronologically between connection sessions. That is to say, a challenge issued in a preceding connection session may be used as the basis of established trust in the current session.

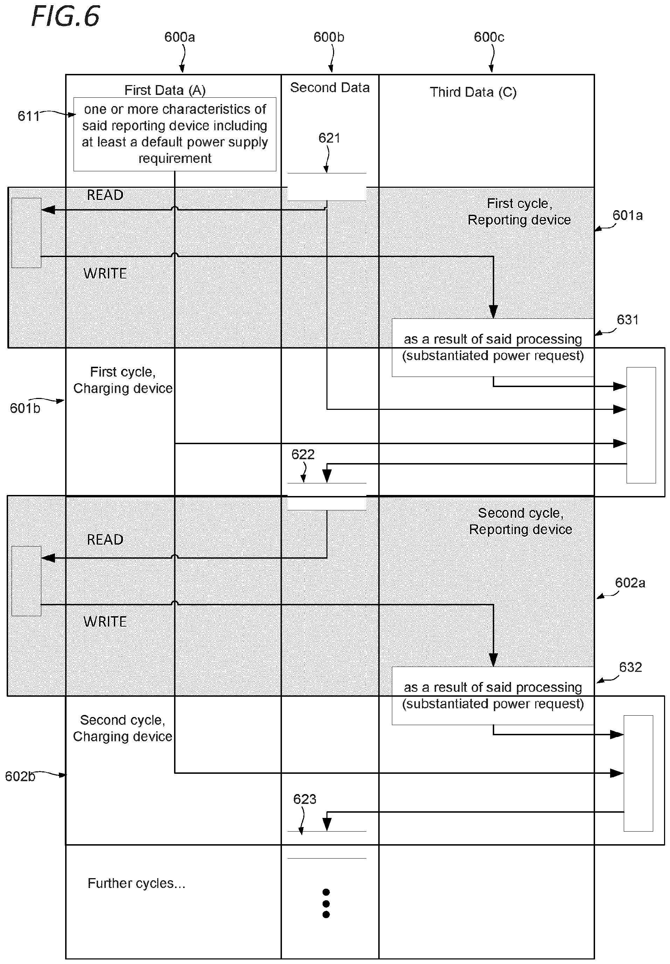

Figure 6 represents a chronologically offset implementation of the trust bootstrapping mechanism.

Figure 6 comprises three columns 600a, 600b, 600c, whose contents concern in any given phase of proceedings the operations with respect to the first data, second data and third data as discussed above, respectively.

Figure 6 comprises rows, 601a, 601b, 602a and 602b, where rows 601a, 601b concern the operations in a first cycle of trust bootstrapping, and rows 602a, 602b concern the operations in a first cycle of trust bootstrapping. Meanwhile, rows 601a, 602a concern certain operations of these respective cycles as relate to the reporting device, rows 601b, 602b concern certain operations of these respective cycles as relate to the charging device.

As shown, a preliminary operation of reading one or more characteristics of the reporting device including at least a default power supply requirement is performed, and as may be expected on the basis of the foregoing description is situated in column 600a as relating to the first data 611.

Proceeding chronologically, second data 621 is read by the reporting device in the first cycle, and processed leading to the writing of third data 631.

Operations now switch to the charging device, which reads the third data 631, and in accordance with this embodiment, also reads the second data. The second data, containing the encrypted challenge, can be decrypted by the charging device, and compared to the third data. If the two decrypted challenge values correspond, and the first data 611 is consistent and correct, on the basis of this processing, new second data comprising a new encrypted challenge value 622 is emitted.

The first cycle is now complete, and the charging device may or may not consider a substantiated power supply request to have been received. In particular, if cycle 601a concerns the first attempt made to connect a particular reporting device to a particular charging device, it is to be expected that the values will not correspond, since whatever challenge value was present in 622 did not originate from the charging device in question. This may imply that in some embodiments power supply is never definitively commenced in the first cycle, and that in such embodiments at least one "reboot" will be required. In any case, the new encrypted challenge is now present in the non-volatile memory, so that if the first cycle failed, or if the reporting device is re-connected later on, further processing will proceed using this new challenge value.

According, continuing the chronological progression, second data 622 is read by the reporting device in the first cycle, and processed leading to the writing of third data 632.

Operations now switch to the charging device, which reads the third data 632, and in accordance with this embodiment, also reads the second data. The second data, containing the encrypted challenge, can be decrypted by the charging device, and compared to the third data. If the two decrypted challenge values correspond, and the first data 611 is consistent and correct, on the basis of this processing, new second data comprising a new encrypted challenge value 623 is emitted. Since challenge 622 was emitted by the charging device with which the reporting device is in communication, it may now be expected that the verification of the decrypted challenge values will now succeed.

It will be appreciated that this chronologically offset approach may give rise to advantageous behaviours for example where a Reporting device is successively connected to different charging devices in accordance with embodiments. As discussed above, in a given cycle, a connected charging device may retrieve the previously issued challenge from the second data, and the response provided in the third data. This means that the challenge need not necessarily have been issued by the currently connected Charging device, but may also have been issued by a previously connected, different charging device. Although in some embodiments, this need not interfere with processing insofar as the new charging device can read the previously issued challenge from the second data, and compare it with the response in the third data, if necessary with reference to the key number identifying the encryption key used, as also present in the second data in certain embodiments. On the other hand, in certain cases this may imply a security risk, since for example. As discussed above, an attacker might load the non-volatile memory with a known good challenge-response pair. This issue may be addressed with reference to the history information optionally stored in the second data as discussed above. If the Reporting device is then placed on a second Charging device, if the identity of the second Charging device is not in the history a new challenge issued by the second reporting device may not be deemed trustworthy. In this scenario, the second charging device may emit a new challenge, the Reporting device signs the new challenge and after the predetermined period, the second reporting device stops the charge and checks the challenge answer returned by the Reporting device. If the reporting device is placed once more on the first sharing device, the first charging device will find its own identifier in the history so that the second charging device's challenge can be deemed trustworthy (if an attacker has just hardcoded a valid challenge and answer -> the probability to have precisely TX1 UID in the history is almost 0. (indeed, history is encoded together with the challenge). In this way, a chain of trust is established, whereby a previously successful connection provides an assurance for later connections by the same device. This may permit connections without the preliminary break in charging for a predetermined period which may otherwise be applied.

The second cycle is now complete, and the charging device may or may not consider a substantiated power supply request to have been received. These operations may be repeated indefinitely, until a valid substantiated power request is provided, and durable power supply may begin, or until the reporting device is removed, and the non-volatile memory is no longer readable by the charging device. Alternatively, a certain number of attempts may be allowed, after which no further attempts are permitted. In a case where a particular device repeatedly fails to provide a substantiated power request, details of the device, e.g. as obtained from the first data, may be reported.

An advantage of the approach of figure 6, in which the encrypted challenge written to the second data in a previous cycle is used as the basis of trust bootstrapping operations is that in a given cycle, the charging device performs a single read and a single write operation, and then relinquishes use of the nonvolatile memory to the Reporting device, which again performs a single read and a single write operation. As such, a simple and streamlined cycle is established.

While the preceding embodiments use the second data to store the available power supply configuration, and/or the encrypted challenge, more generally Section B may be used to store any communications from to charging device to the reporting device.

For example, additional data such as discussed below may be transferred using the second data.

Key number: As discussed above, certain embodiments call for the Reporting device to decrypt and encrypted challenge using a secret key known to both the Charging device and the Reporting device. To limit exposure of the shared secret, a plurality of secret keys may be used, with a randomly or otherwise selected key being used in each instance. Where this is the case, an identifier such as the number of the private key to be used to decrypt section B may accompany the challenge itself.

Charging device power rating: the charging device may additionally write its specified power budget. This may be accessed and used by the Reporting device in determining an alternative power supply configuration as discussed above. This value may be encrypted, for example using the key used to encrypt the challenge as discussed above, which may, for example be the key specified by the key number.

Charging device identifier- identifier of the last charging device connected to the Receiving device. This information can be accessed by the charging device at a later juncture, to determine whether a presented Reporting device has been connected in the past, or not. This value may be encrypted, for example using the key used to encrypt the challenge as discussed above, which may, for example be the key specified by the key number.

Charging device history-identifier, or partial identifier, of a preceding plurality of charging devices connected to the Receiving device. This information can be accessed by the charging device at a later juncture, to determine whether a presented Reporting device has been connected in the past, or not. This information may be treated as a FIFO list. This value may be encrypted, for example using the key used to encrypt the challenge as discussed above, which may, for example be the key specified by the key number.

Charging device checksum: a checksum of the entire second data may be provided to help determine integrity of retrieved data.

While the preceding embodiments use the third data to store the alternative power supply configuration, and/or the decrypted challenge, more generally the third data (C) may be used to store any communications from to Reporting device to the Charging device.

For example, a Receiving device checksum: a checksum of the entire third data may be provided to help determine integrity of retrieved data.

On the basis of the foregoing, embodiments combining a number of the features presented above may proceed as follows:
1. Charging device reads first, second and third data.
2. Charging device performs checks on retrieved data:
   a. Check first data signature
   b. Check protocol number
   c. Check second data checksum
   d. Decrypt second data with key indicated by key number
   e. Check if this is a first encounter (referring to history and charging device identifier in second data)
   f. Check second data for encrypted challenge value, and third data for decrypted challenge value. Decrypt encrypted challenge and compare to decrypted challenge value
3. Charging device revises second data:
   a. Chose available power supply configuration
   b. If first encounter, add charging device ID to history
   c. Generate new random challenge
   d. Generate new key and encrypt
   e. Generate new second data checksum
4. Charging device writes new second data to non-volatile memory
5. Charging device provides power to device
6. Reporting devices reads section B
7. Reporting device gets available power supply configuration
   a. Check second data checksum
   b. Decrypt second data with encryption key indicated by key number
   c. Read available power supply configuration
8. Reporting device advertises available power supply configuration
   a. Send available power supply configuration to the operational unit
   b. If device refuses available power supply configuration, ask for alternative power supply configuration
9. Reporting devices compiles third data
   a. Copy decoded challenge to third data
   b. Copy alternative power supply configuration, if any.
10. Reporting devices writes third data non-volatile memory
11. Charging device terminates power supply
   a. If the Reporting device is removed
   b. If a short circuit is detected
   c. If this is a first encounter (after a predetermined period, e.g. 10 seconds)
   d. If the Decrypted encrypted challenge decrypted challenge value (step 2f) do not match. (for example after a predetermined period as discussed above)
   e. Optionally, if the second data checksum failed: since this may indicate memory corruption, necessitating a reset.

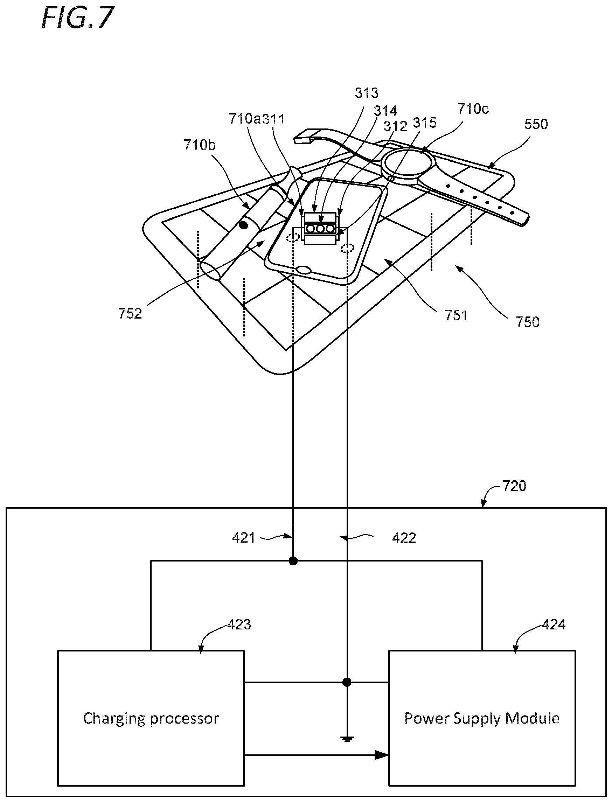

As such, there may be provided an optional step of performing any of the above operations, in particular of identifying the reporting device UID and/or the equivalent on the reporting device side. Figure 7 shows a system comprising a charging device and a reporting device as described with respect to figures 3 and 4 respectively.

As shown, the reporting device 710a comprises a mobile telephone device by way of illustration, however it will be appreciated that the principles presented herein extend to any device requiring electrical power, and particularly any portable device requiring electrical power including any IOT device, portable backup batteries, tablet computers, laptop computers, electric vehicles, surgical or medical equipment, power tools, etc. It will be appreciated that the present invention may be applied equally to any device able to benefit from a physical data or power connection. In particular, it is not limited in scale to small devices such as those shown, but may be extended to vehicles, rack mounted computer or communications equipment, medical devices, etc.

Figure 7 represents further exemplary devices e-cigarette 710b and smart watch 710c, which might equally embody reporting devices in accordance with embodiments.

As shown, a reporting device 710a comprises substantially the same features, correspondingly numbered, as presented in and described with regard to figure 3.

As shown, a charging device 720 comprises substantially the same features, correspondingly numbered, as presented in and described with regard to figure 4.

As shown, the charging device is associated with a charging surface 750. As shown, three articles 710a, 710b and 710c are disposed on the surface 750. The surface 750 comprises a matrix of conductive regions 751, 752 etc. Each of these conductive regions is coupled to a coupling manager (not shown), which may be responsible for detecting the presence of an article, and coupling the first supply line 311 of the Reporting device to the first supply line of the charging device 421, and the second the supply line 312 of the Reporting device to the second supply line of the charging device 422, so that the exchange of data via the non-volatile memory 314 as described above may ensue. The operation of the coupling manager is outside the scope of the present application and will not be described further. It will be appreciated that in other embodiments, for example where the charging device and reporting device are simply plugged together, no such coupling manager will be required. On the other hand, it may be noted that the functions of the embodiments described above, in particular as regards to management of a specified power budget, become particularly advantageous when this budget must be divided among a plurality of Reporting devices, and the context of figure 7 presents one scenario where this becomes a major consideration. In any case, in this light the operations of determining whether a default power supply requirement or an alternative power supply requirement are compatible with a specified power budget may comprise balancing the demands of multiple reporting devices. Similarly, this approach may serve to reduce to the greatest possible extent the number of read/write, in view of the underlying objective of communicating effectively via the same lines as for power transmission. Leading to the desirability of only performing read/write operations before switching to the supply of power.

In the scenario of figure 7, each possible pair of conductive regions may constitute a multimodal electrical coupling via which the first supply line 311 of a Reporting device may be coupled to the first supply line of the charging device 421, and the second the supply line 312 of a Reporting device coupled to the second supply line of the charging device 422.

Accordingly, while embodiments may comprise solely a charging device as described above, or a reporting device as described above, other embodiments may comprise a system comprising both a charging device as described above, and a reporting device as described above. Still further, other embodiments may comprise a system comprising one or more charging device as described above, and/or one or more reporting devices as described above.

Accordingly, in certain embodiments a charging management system may be provided based on communications between a charging device and a reporting device. The charging device may interface with the reporting device via a multicontact surface, a conventional plug, or otherwise, the reporting device may typically comprise a portable, rechargeable device such as a smartphone, smart watch, camera, etc. Communications between the between the charging device and the reporting device may take place via the same pair of power lines as are used for providing power from the charging device and the reporting device, by means of a non-volatile memory in the reporting device, which may be accessed sequentially by one device or the other, and used to store information to be retrieved by the other to retrieve when activated. This exchange of information may implement a negotiation of a mutually acceptable power supply configuration, an authentication of a particular reporting device, etc.

The disclosed implementations as regards either the Reporting device or the Charging device can take form of an entirely hardware embodiment, an entirely software embodiment for example as regards the methods described above or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

These methods and processes may be implemented by means of computer-application programs or services, an application-programming interface (API), a library, and/or other computer-program product, or any combination of such entities.

As such, there is provided a program for a computer comprising instructions adapted to implement the steps of the method of operating the charging device and/or the method of operating the reporting device as set out above, or more generally and the operations described above, for example with respect to figures 3 to 7.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A reporting device comprising a first supply line and a second supply line and an operational unit coupled across said first supply line and said second supply line, said reporting device further comprising a non-volatile memory addressable via said first supply line and said second supply line, and a reporting processor in communication with said non-volatile memory and having power supply connections coupled to said first supply line and said second supply line, wherein said non-volatile memory comprises first data reflecting one or more characteristics of said reporting device including at least a default power supply requirement of said reporting device, and wherein said reporting processor is configured, on receiving power via said first supply line and said second supply line, to interrogate said non-volatile memory to read second data , to process said second data and to write third data as a result of said processing to said memory constituting a substantiated power supply request.

2. The reporting device of claim 1 wherein said reporting processor is configured to interpret said second data as comprising an indication of an available power supply configuration for said first supply line and said second supply line, wherein said reporting processor is further configured to process said indication of an available power supply configuration to determine whether said available power supply configuration is compatible with the requirements of said reporting device, and where said third data comprises an indication that said available power supply configuration is compatible with the requirements of said reporting device.

3. The reporting device of claim 1 wherein said reporting processor is configured to interpret said second data as comprising an indication of an available power supply configuration for said first supply line and said second supply line, wherein said reporting processor is further configured process said indication of an available power supply configuration to determine whether said available power supply configuration is compatible with the requirements of said reporting device, and where said third data comprises an indication of an alternative power supply configuration compatible with the requirements of said reporting device, said alternative power supply configuration being different from said available power supply configuration and said default power supply requirement.

4. The reporting device of any preceding claim wherein said reporting processor is configured to interpret said second data as comprising an encrypted challenge value, wherein said processor is further configured to process said encrypted challenge value using an encryption key encoded in said reporting processor to obtain a decrypted challenge value, where said third data comprises said decrypted challenge value.

5. A charging device comprising a first supply line and a second supply line and a charging processor coupled to communicate across said first supply line and said second supply line, and to switchably connect power across said first supply line and said second supply line at a level determined by said charging processor for supply to a reporting device connected thereto in accordance with a specified power budget,
said charging processor being configured to read first data reflecting one or more characteristics of said reporting device including at least a default power supply requirement of said reporting device from a non-volatile memory of said reporting device via said first supply line and said second supply line, and wherein said charging processor is configured to process said first data, and to write second data to said non-volatile memory of said reporting device via said first supply line and said second supply line as a result of said processing to said memory constituting a substantiated power supply response, and
to read third data from said non-volatile memory, and determine whether said third data constitutes a substantiated data request, and in a case where said third data constitutes a substantiated data request, to switch power across said first supply line and said second supply line.

6. The charging device of claim 5, wherein said charging device is further adapted, in a case where said third data does not constitutes a substantiated power request, to switch power across said first supply line and said second supply line for a predetermined period, and after expiry of said predetermined period, to read futher third data from said non-volatile memory of said reporting device via said first supply line and said second supply line, and to determine whether said third data constitutes a substantiated power supply request, and in a case where said third data constitutes a substantiated power supply request, switching power across said first supply line and said second supply line.

7. The charging device of claim 5 or 6 wherein said charging processor is configured to determine whether said default power supply requirement is compatible with said specified power budget (in "first data" AKA "A") , and in a case where said default power supply requirement is not compatible with said specified power budget, to incorporate an indication of an available power supply configuration in said second data, and where said third data comprises an indication that said available power supply configuration is compatible with the requirements of said reporting device and thereby constitutes a substantiated power supply request, and where said operation of switching power across said first supply line and said second supply line comprises switching power across said first supply line and said second supply line in accordance with said available power supply configuration .

8. The charging device of any of claims 5 to 7 wherein said charging processor is configured to determine whether said default power supply requirement is compatible with said specified power budget, and in a case where said default power supply requirement is not compatible with said specified power budget, to incorporate an indication of an available power supply configuration in said second data, and where said third data comprises an indication of an alternative power supply configuration being different from said available power supply configuration and said default power supply requirement.

9. The charging device of claim 8 wherein said charging processor is configured to determine whether said alternative power supply configuration is compatible with said specified power budget, and in a case where said alternative power supply configuration is not compatible with said specified power budget, considering said third data not to constitute a substantiated power supply request.

10. The charging device of claim 8 wherein said charging processor is configured to determine whether said alternative power supply configuration is compatible with said specified power budget, and in a case where said alternative power supply configuration is compatible with said specified power budget, considering said third data to constitute a substantiated power supply request and where said operation of switching power across said first supply line and said second supply line comprises switching power across said first supply line and said second supply line in accordance with said alternative power supply configuration.

11. The charging device of any of claims 5 to 10 wherein said charging processor is configured to encrypt an initial challenge value using an encryption key encoded in said charging processor to obtain an encrypted challenge value, and to incorporate said encrypted challenge value in said second data, and wherein said charging processor is further configured to read a decrypted challenge value from said third data, and to compare said encrypted challenge value with said decrypted challenge value, and in a case where said encrypted challenge value and said decrypted challenge value do not match, considering said third data not to constitute a substantiated power supply request.

12. The charging device of claim 11 wherein said charging processor is further configured to read said second data to extract said encrypted challenge value, wherein said step operation of comparing said encrypted challenge value with said decrypted challenge value is performed with respect to said encrypted challenge value read from said second data.

13. The charging device of any of claims 5 to 12 wherein said charging processor is further configured to read said non-volatile memory of said reporting device via said first supply line and said second supply line to determine whether an identifier of said charging device is stored therein.

14. The charging device of any of claims 5 to 13 wherein said charging device is configured prior to determining whether said third data constitutes a substantiated power supply request, to read said second data in said non-volatile memory of said reporting device via said first supply line and said second supply line, and determine whether said second data comprises an identifier of said charging device, and in a case where said second data does not comprise an identifier of said charging device, determining said third data not to constitute a substantiated data request, and
wherein said substantiated power supply response further comprises an identifier of said charging device.

15. A method of operating a reporting device comprising a first supply line and a second supply line and an operational unit coupled across said first supply line and said second supply line, said reporting device further comprising a non-volatile memory addressable via said first supply line and said second supply line, and a reporting processor in communication with said non-volatile memory and having power supply connections coupled to said first supply line and said second supply line, wherein said non-volatile memory comprises first data reflecting one or more characteristics of said reporting device including at least a default power supply requirement of said reporting device, said method comprising the steps of
on receiving power via said first supply line and said second supply line interrogating said non-volatile memory to read second data;
processing said second data; and
writing third data as a result of said processing to said memory constituting a substantiated power supply request.

16. A method of operating a charging device comprising a first supply line and a second supply line and a charging processor coupled to communicate across said first supply line and said second supply line, and to switchably connect power across said first supply line and said second supply line at a level determined by said charging processor for supply to a reporting device connected thereto in accordance with a specified power budget,
said method comprising the steps of said charging processor reading first data reflecting one or more characteristics of said reporting device including at least a default power supply requirement of said reporting device from a non-volatile memory of said reporting device via said first supply line and said second supply line;
processing said first data, and
writing second data to said non-volatile memory of said reporting device via said first supply line and said second supply line as a result of said processing to said memory constituting a substantiated power supply response, and
reading third data from said non-volatile memory, and said charging processor determining whether said third data constitutes a substantiated data request, and in a case where said third data constitutes a substantiated data request,
switching power across said first supply line and said second supply line.

17. The method of claim 16 comprising the further step, in a case where said third data does not constitutes a substantiated data request, of switching power across said first supply line and said second supply line for a predetermined period, and after expiry of said predetermined period,
reading further third data from said non-volatile memory of said reporting device via said first supply line and said second supply line, and
determining whether said third data constitutes a substantiated power supply request, and
in a case where said third data constitutes a substantiated power supply request, switching power across said first supply line and said second supply line.

18. A computer program comprising instructions which, when the program is executed by a computer, cause the computer to carry out the method of any of claims 15, 16 or 17.
